# EUROPÄISCHE PATENTSCHRIFT

(11) **EP 1 399 512 B1**
(45) Veröffentlichungstag und Bekanntmachung des Hinweises auf die Patenterteilung: **15.08.2007**
(21) Anmeldenummer: 02735392.9
(22) Anmeldetag: 29.05.2002
(51) Int. Cl.: C08L 69/00, C08K 3/34

(54) **SCHLAGZÄHMODIFIZIERTE POLYMER-ZUSAMMENSETZUNG**
MODIFIED IMPACT-RESISTANT POLYMER COMPOSITION
COMPOSITION POLYMERIQUE A RESILIENCE MODIFIEE

(30) Priorität: 11.06.2001 DE 10128174
(43) Veröffentlichungstag der Anmeldung: 24.03.2004
(73) Patentinhaber: Bayer MaterialScience AG, 51368 Leverkusen (DE)
(72) Erfinder: SEIDEL, Andreas, 41542 Dormagen (DE); VATHAUER, Marc, 50858 Köln (DE); ECKEL, Thomas, 41540 Dormagen (DE); WARTH, Holger, 41539 Dormagen (DE); WITTMANN, Dieter, 51375 Leverkusen (DE)
(86) Internationale Anmeldenummer: PCT/EP2002/005875
(87) Internationale Veröffentlichungsnummer: WO 2002/100948

(56) Entgegenhaltungen:
- EP-A- 0 709 432
- WO-A-98/51737
- DE-A- 19 960 316
- US-A- 5 162 419

## Beschreibung

Die Erfindung betrifft eine schlagzähmodifizierte Polymer-Zusammensetzung mit verbesserten mechanischen Eigenschaften sowie aus der Zusammensetzung hergestellte Formkörper.

Es ist bekannt, zur Erhöhung der Steifigkeit und Zugfestigkeit, zur Erhöhung der Dimensionsstabilität bei Temperaturschwankungen und zur Verbesserung der Oberflächeneigenschaften Polycarbonat-Zusammensetzungen Talk als Verstärkungsstoff zuzusetzen. In flammwidrigen Materialien dient der Talkzusatz auch als Flammschutzsynergist.

Aus der WO 98/51737 A1 sind PC/SAN-Blends mit polystyrolgepfropftem Polybutadienkautschuk als Schlagzähmodifikator bekannt, die mineralische Füllstoffe, z.B. Talk, mit einer mittleren Teilchengröße von vorzugsweise 1,5 bis 5 µm enthalten. Die beschriebenen Formmassen sind nicht flammwidrig ausgerüstet. Aus den Beispielen geht ferner hervor, dass Formmassen, die Talk mit einer Teilchengröße < 1,5 mm enthalten, einen geringen Schmelzvolumenindex (MVI) aufweisen. Die beschriebenen PC/SAN-Blends mit polystyrolgepfropftem Polybutadienkautschuk weisen Defizite in den mechanischen Eigenschaften auf.

In der US-A 5 162 419 werden PC/ABS Formmassen beschrieben, die zur Verbesserung des Oberflächenaussehens spritzgegossener Fertigteile Talk mit einer mittleren Teilchengröße von 1,5 bis 20 µm, vorzugsweise 4,0 bis 10 µm, enthalten. Die beschriebenen Formmassen zeichnen sich durch eine matte Oberfläche und verbesserte mechanische Eigenschaften aus.

Aus der JP-A 11/199768 sind flammwidrige, Talk und Phosphorsäureester enthaltende PC/ABS-Zusammensetzungen bekannt, wobei 90 Gew.-% des Talkes eine Teilchengröße < 4 µm aufweist. Die beschriebenen PC/ABS-Zusammensetzungen weisen ein verbessertes Brandverhalten auf und eignen sich insbesondere für Dünnwandapplikationen. Formmassen mit Talktypen mit mittlerem Partikeldurchmesser im Sub-Mikrobereich werden nicht beschrieben, noch ergeben sich Hinweise darauf, dass durch Verwendung solcher Typen eine Verbesserung der mechanischen Eigenschaften, insbesondere der Reißdehnung und Bindenahtfestigkeit, erzielt werden kann.

Aus der US-A 5 091 461 sind PC/ABS-Zusammensetzungen bekannt, die als Verstärkungsstoff Talk und nicht calcinierte Tonmaterialien enthalten. Die verwendeten Talktypen weisen eine Teilchengröße von weniger als 44 µm (= 44.000 nm) auf. Die PC/ABS-Zusammensetzungen zeichnen sich durch einen verringerten linearen Wärmeausdehnungskoeffizienten und relativ hoher Tieftemperatur-Schlagzähigkeit aus.

Die EP-A 0 758 003 A2 beschreibt PC-Formmassen, die als Verstärkungsstoff anorganische Füllstoffe mit einem Teilchendurchmesser > 0,5 mm enthalten können. Als Füllstoff wird u.a. Talk mit Teilchendurchmesser ≥ 0,2 mm angegeben. Die PC-Formmassen können ferner flammwidrig ausgerüstet sein und zeichnen sich durch ein verbessertes Oberflächenaussehen und ein hohes Elastizitätsmodul aus. Polycarbonat-Blends werden in dieser Schrift nicht beschrieben.

Nachteilig an den aus dem Stand der Technik bekannten talkhaltigen PC/ABS-Blends ist, dass durch den Talkzusatz zwar eine Erhöhung des E-Moduls erzielt wird, gleichzeitig jedoch andere mechanische Eigenschaften wie Reißdehnung und Zähigkeit verschlechtert werden. Der Zusatz von Talk zu PC/ABS-Blends führt in der Regel zu einer deutlichen Verschlechterung der Zähigkeit des aus der Zusammensetzung hergestellten Formkörpers. Oft ist die bei Zusatz von Talk erzielte Zähigkeit daher entweder nicht ausreichend für spezielle Anwendungen oder aber die Einsatzmenge des anorganischen Materials ist zu klein, um die durch dessen Einsatz beabsichtigten Eigenschaftsvorteile in genügendem Umfang zu realisieren. Hinzu kommt, dass die Bindenahtfestigkeit in bekannten talkhaltigen PC/ABS-Blends häufig nicht ausreichend ist.

Wünschenswert ist es somit, Polycarbonat-Zusammensetzungen bereitzustellen, denen in bekannter Weise zwecks Verbesserung mindestens einer Materialeigenschaft Talk zugesetzt ist, die sich aber durch ein gegenüber dem Stand der Technik verbessertes Zähigkeits- und/oder Tieftemperaturzähigkeitsniveau sowie eine erhöhte Bindenahtfestigkeit auszeichnen. Insbesondere sollen sich die Polycarbonat-Zusammensetzungen durch eine verbesserte Tieftemperaturzähigkeit bei gleichzeitig guten Werten für Reißdehnung und E-Modul auszeichnen.

Die erfindungsgemäßen Polycarbonat-Zusammensetzungen sollen weiterhin ein gutes Verarbeitungsverhalten, d.h. eine hohe Schmelzefließrate, aufweisen.

Gelöst wird diese Aufgabe durch eine
1. Polycarbonat-Zusammensetzung bestehend aus
   (A) mindestens ein aromatisches Polycarbonat und/oder Polyestercarbonat,
   (B) mindestens ein Pfropfpolymerisat von 5 bis 95 Gew.-% einer Mischung aus 50 bis 99 Gew.-Teilen Vinylaromaten und/oder kernsubstituierten Vinylaromaten und/oder Methacrylsäure-(C₁-C₈)-Alkylester und 1 bis 50 Gew.-Teilen Vinylcyanide und/oder (Meth)-Acrylsäure-(C₁-C₈)-Alkylester und/oder Derivate ungesättigter Carbonsäuren auf 95 bis 5 Gew.-% mindestens einer Pfropfgrundlage mit einer Glastemperatur kleiner etwa 10°C,
   (C) mindestens einen Talk mit einem mittleren Partikeldurchmesser von weniger als 1000 nm,
   (D) gegebenenfalls ein Vinyl(Co)Polymerisat und/oder Polyalkylenterephthalat,
   (E) eine phosphorhaltige Verbindung der allgemeinen Formel IVa 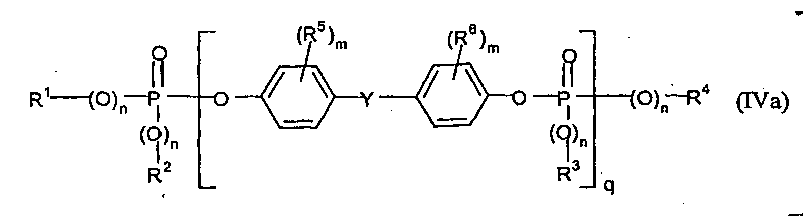
      - R¹, R², R³ und R⁴,: unabhängig voneinander jeweils gegebenenfalls halogeniertes C₁ bis C₈-Alkyl, jeweils gegebenenfalls durch Alkyl, und/oder Halogen, substituiertes C₅ bis C₆-Cycloalkyl, C₆ bis C₂₀-Aryl oder C₇ bis C₁₂-Aralkyl,
      - n: unabhängig voneinander, 0 oder 1,
      - q: eine Zahl zwischen 0,3 und 20,
      - m: unabhängig voneinander 0, 1, 2, 3 oder 4,
      - R⁵ und R⁶: unabhängig voneinander C₁ bis C₄-Alkyl, vorzugsweise Methyl oder Ethyl und
      - Y: C₁ bis C₇-Alkyliden, C₁-C₇-Alkylen, C₅ bis C₁₂-Cycloalkylen, C₅ bis C₁₂-Cycloalkyliden, -O-, -S-, -SO₂ oder -CO-, vorzugsweise Isopropyliden oder Methylen, bedeuten.
   (F) gegebenenfalls ein Antidrippingmittel ausgewählt aus der Gruppe bestehend aus fluorierten Polyolefinen, Silikonen und Aramiden, und
   (G) gegebenenfalls mindestens ein weiteres Polymer-Additiv, ausgewählt aus Gleit- und Entformungsmitteln, Nukleiermitteln, Antistatika, Stabilisatoren, Füll- und Verstärkungsstoffe, Farbstoffen und Pigmenten, FR-Synergisten, wobei die. FR-Synergisten ausgewählt sind aus der Gruppe der Decabrombisphenylether, Tetrabrombisphenol, Ammoniumbromid, Melamin, Melaminformaldehyd-Harze, Mg-, Al-Hydroxid, Antimonoxide, Bariummetaborat, Hydroxoantimonat, Zirkonoxid, Zirkonhydroxid, Molybdenoxid, Ammoniummolybdat, Zinkborat, Ammoniumborat, Bariummetaborat, Silikat, Siliziumoxid und Zinnoxid sowie Siloxanverbindungen.
2. Zusammensetzung nach Anspruch 1, worin Komponente A in einer Menge von 20 bis 90 Gew.-%, bezogen auf die Masse der Zusammensetzung, enthalten ist.

Gegenstand der Erfindung sind ferner aus diesen Zusammensetzungen bestehende oder diese enthaltende Formkörper.

Überraschend wurde festgestellt, dass durch Zusatz spezieller Talktypen mit einem mittleren Partikeldurchmesser von weniger als etwa 1000 nm zu PC/ABS-Blends gegenüber vergleichbaren Formmassen mit herkömmlichen Talkarten eine deutliche Verbesserung von Bindenahtfestigkeit, Reißdehnung und Zähigkeit unter Beibehaltung des E-Moduls und der Schmelzefließfähigkeit erzielt werden kann.

Die erfindungsgemäßen Polycarbonat- bzw. Polyestercarbonat-Zusammensetzungen können neben den beschriebenen Pfropfpolymerisaten weitere polymere Bestandteile und übliche Additive enthalten. Weitere mögliche polymere Bestandteile sind beispielsweise Pfropfpolymerisate eines Vinylmonomeren auf einer oder mehreren Pfropfgrundlagen, thermoplastische Vinyl(Co)Polymerisate, Polyalkylenterephthalate, Polyamide und weitere thermoplastische Harze. Mögliche Polymeradditive sind Entformungsmittel, Stabilisatoren, Antioxidantien, Flammschutzmittel, Farbstoffe und Pigmente, Antistatika, Nukleiermittel, Antitropfmittel sowie organische und weitere anorganische Füll- und Verstärkungsstoffe.

Die in den erfindungsgemäßen Zusammensetzungen enthaltenen Polycarbonate/Polyestercarbonate sowie weitere mögliche Bestandteile werden anschließend beispielhaft erläutert.

### Komponente A

Erfindungsgemäß geeignete aromatische Polycarbonate und/oder aromatische Polyestercarbonate gemäß Komponente A sind literaturbekannt oder nach literaturbekannten Verfahren herstellbar (zur Herstellung aromatischer Polycarbonate siehe beispielsweise Schnell, "Chemistry and Physics of Polycarbonates", Interscience Publishers, 1964 sowie die DE-AS 1 495 626, DE-A 2 232 877, DE-A 2 703 376, DE-A 2 714 544, DE-A 3 000 610, DE-A 3 832 396; zur Herstellung aromatischer Polyestercarbonate z. B. DE-A 3 077 934).

Die Herstellung aromatischer Polycarbonate erfolgt z. B. durch Umsetzung von Diphenolen mit Kohlensäurehalogeniden, vorzugsweise Phosgen, und/oder mit aromatischen Dicarbonsäuredihalogeniden, vorzugsweise Benzoldicarbonsäuredihalogeniden, nach dem Phasengrenzflächenverfahren, gegebenenfalls unter Verwendung von Kettenabbrechern, beispielsweise Monophenolen und gegebenenfalls unter Verwendung von trifunktionellen oder mehr als trifunktionellen Verzweigern, beispielsweise Triphenolen oder Tetraphenolen.

Diphenole zur Herstellung der aromatischen Polycarbonate und/oder aromatischen Polyestercarbonate sind vorzugsweise solche der Formel (I) 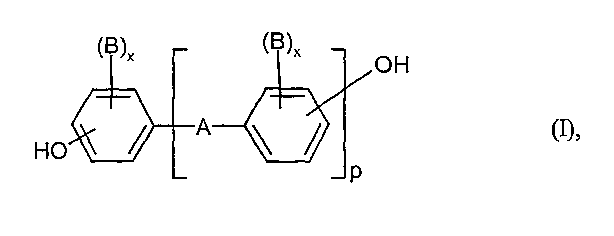 wobei
- A: eine Einfachbindung, C₁ bis C₅-Alkylen, C₂ bis C₅-Alkyliden, C₅ bis C₆-Cycloalkyliden, -O-, -SO-, -CO-, -S-, -SO₂-, C₆ bis C₁₂-Arylen, an das weitere aromatische gegebenenfalls Heteroatome enthaltende Ringe kondensiert sein können,
oder ein Rest der Formel (II) oder (III) 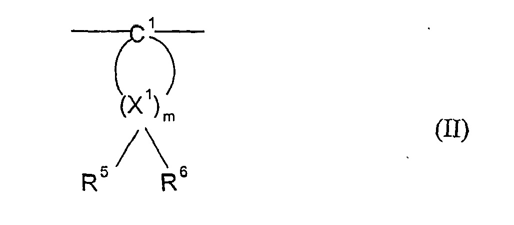 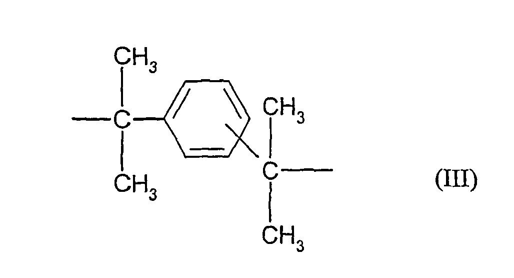
- B: jeweils C₁ bis C₁₂-Alkyl, vorzugsweise Methyl, Halogen, vorzugsweise Chlor und/oder Brom
- x: jeweils unabhängig voneinander 0, 1 oder 2,
- p: 1 oder 0 sind, und
- R⁵ und R⁶: für jedes X¹ individuell wählbar, unabhängig voneinander Wasserstoff oder C₁ bis C₆-Alkyl, vorzugsweise Wasserstoff, Methyl oder Ethyl,
- X¹: Kohlenstoff und
- m: eine ganze Zahl von 4 bis 7, bevorzugt 4 oder 5 bedeuten, mit der Maßgabe, dass an mindestens einem Atom X¹, R⁵ und R⁶ gleichzeitig Alkyl sind.

Bevorzugte Diphenole sind Hydrochinon, Resorcin, Dihydroxydiphenole, Bis-(hydroxyphenyl)-C₁-C₅-alkane, Bis-(hydroxyphenyl)-C₅-C₆-cycloalkane, Bis-(hydroxyphenyl)-ether, Bis-(hydroxyphenyl)-sulfoxide, Bis-(hydroxyphenyl)-ketone, Bis-(hydroxyphenyl)-sulfone und α,α-Bis-(hydroxyphenyl)-diisopropyl-benzole sowie deren kernbromierte und/oder kernchlorierte Derivate.

Besonders bevorzugte Diphenole sind 4,4'-Dihydroxydiphenyl, Bisphenol-A, 2,4-Bis(4-hydroxyphenyl)-2-methylbutan, 1,1-Bis-(4-hydroxyphenyl)-cyclohexan, 1,1-Bis-(4-hydroxyphenyl)-3.3.5-trimethylcyclohexan, 4,4'-Dihydroxydiphenylsulfid, 4,4'-Dihydroxydiphenylsulfon sowie deren di- und tetrabromierten oder chlorierten Derivate wie beispielsweise 2,2-Bis(3-Chlor-4-hydroxyphenyl)-propan, 2,2-Bis-(3,5-dichlor-4-hydroxyphenyl)-propan oder 2,2-Bis-(3,5-dibrom-4-hydroxyphenyl)propan. Insbesondere bevorzugt ist 2,2-Bis-(4-hydroxyphenyl)propan (Bisphenol-A).

Es können die Diphenole einzeln oder als beliebige Mischungen eingesetzt werden. Die Diphenole sind literaturbekannt oder nach literaturbekannten Verfahren erhältlich.

Für die Herstellung der thermoplastischen, aromatischen Polycarbonate geeignete Kettenabbrecher sind beispielsweise Phenol, p-Chlorphenol, p-tert.-Butylphenol oder 2,4,6-Tribromphenol, aber auch langkettige Alkylphenole, wie 4-(1,3-Tetramethylbutyl)-phenol gemäß DE-A 2 842 005 oder Monoalkylphenol bzw. Dialkylphenole mit insgesamt 8 bis 20 C-Atomen in den Alkylsubstituenten, wie 3,5-di-tert.-Butylphenol, p-iso-Octylphenol, p-tert.-Octylphenol, p-Dodecylphenol und 2-(3,5-Dimethylheptyl)-phenol und 4-(3,5-Dimethylheptyl)-phenol. Die Menge an einzusetzenden Kettenabbrechern beträgt im allgemeinen zwischen 0,5 Mol-%, und 10 Mol-%, bezogen auf die Molsumme der jeweils eingesetzten Diphenole.

Die thermoplastischen, aromatischen Polycarbonate haben mittlere Gewichtsmittelmolekulargewichte (M_{w}, gemessen z. B. durch Ultrazentrifuge oder Streulichtmessung) von 10.000 bis 200.000, vorzugsweise 15.000 bis 80.000.

Die thermoplastischen, aromatischen Polycarbonate können in bekannter Weise verzweigt sein, und zwar vorzugsweise durch den Einbau von 0,05 bis 2,0 Mol-%, bezogen auf die Summe der eingesetzten Diphenole, an dreifunktionellen oder mehr als dreifunktionellen Verbindungen, beispielsweise solchen mit drei und mehr phenolischen Gruppen.

Geeignet sind sowohl Homopolycarbonate als auch Copolycarbonate. Zur Herstellung erfindungsgemäßer Copolycarbonate gemäß Komponente A können auch 1 bis 25 Gew.-%, vorzugsweise 2,5 bis 25 Gew.-% (bezogen auf die Gesamtmenge an einzusetzenden Diphenolen) Polydiorganosiloxane mit Hydroxyaryloxy-Endgruppen eingesetzt werden. Diese sind bekannt (beispielsweise US 3 419 634) bzw. nach literaturbekannten Verfahren herstellbar. Die Herstellung Polydiorganosiloxanhaltiger Copolycarbonate wird z. B. in DE-A 3 334 782 beschrieben.

Bevorzugte Polycarbonate sind neben den Bisphenol-A-Homopolycarbonaten die Copolycarbonate von Bisphenol-A mit bis zu 15 Mol-%, bezogen auf die Molsummen an Diphenolen, anderen als bevorzugt bzw. besonders bevorzugt genannten Diphenolen, insbesondere 2,2-Bis(3,5-dibrom-4-hydroxyphenyl)-propan.

Aromatische Dicarbonsäuredihalogenide zur Herstellung von aromatischen Polyestercarbonaten sind vorzugsweise die Disäuredichloride der Isophthalsäure, Terephthalsäure, Diphenylether-4,4'-dicarbonsäure und der Naphthalin-2,6-dicarbonsäure.

Besonders bevorzugt sind Gemische der Disäuredichloride der Isophthalsäure und der Terephthalsäure im Verhältnis zwischen 1:20 und 20:1.

Bei der Herstellung von Polyestercarbonaten wird zusätzlich ein Kohlensäurehalogenid, vorzugsweise Phosgen als bifunktionelles Säurederivat mit verwendet.

Als Kettenabbrecher für die Herstellung der aromatischen Polyestercarbonate kommen außer den bereits genannten Monophenolen noch deren Chlorkohlensäureester sowie die Säurechloride von aromatischen Monocarbonsäuren, die gegebenenfalls durch C₁ bis C₂₂-Alkylgruppen oder durch Halogenatome substituiert sein können, sowie aliphatische C₂ bis C₂₂-Monocarbonsäurechloride in Betracht.

Die Menge an Kettenabbrechern beträgt jeweils 0,1 bis 10 Mol-%, bezogen im Falle der phenolischen Kettenabbrecher auf Mole Diphenole und im Falle von Monocarbonsäurechlorid-Kettenabbrecher auf Mol Dicarbonsäuredichloride.

Die aromatischen Polyestercarbonate können auch aromatische Hydroxycarbonsäuren eingebaut enthalten.

Die aromatischen Polyestercarbonate können sowohl linear als auch in bekannter Weise verzweigt sein (siehe dazu ebenfalls DE-A 2 940 024 und DE-A 3 007 934).

Als Verzweigungsmittel können beispielsweise drei- oder mehrfunktionelle Carbonsäurechloride, wie Trimesinsäuretrichlorid, Cyanursäuretrichlorid, 3,3'-,4,4'-Benzophenon-tetracarbonsäuretetrachlorid, 1,4,5,8-Napthalintetracarbonsäuretetra-chlorid oder Pyromellithsäuretetrachlorid, in Mengen von 0,01 bis 1,0 Mol-% (bezogen auf eingesetzte Dicarbonsäuredichloride) oder drei- oder mehrfunktionelle Phenole, wie Phloroglucin, 4,6-Dimethyl-2,4,6-tri-(4-hydroxyphenyl)-hepten-2,4,4-Dimethyl-2,4-6-tri-(4-hydroxyphenyl)-heptan, 1,3,5-Tri-(4-hydroxyphenyl)-benzol, 1,1,1-Tri-(4-hydroxyphenyl)-ethan, Tri-(4-hydroxyphenyl)-phenylmethan, 2,2-Bis[4,4-bis(4-hydroxyphenyl)-cyclohexyl]-propan, 2,4-Bis(4-hydroxyphenyl-isopropyl)-phenol, Tetra-(4-hydroxyphenyl)-methan, 2,6-Bis(2-hydroxy-5-methyl-benzyl)-4-methylphenol, 2-(4-Hydroxyphenyl)-2-(2,4-dihydroxyphenyl)-propan, Tetra-(4-[4-hydroxyphenyl-isopropyl]-phenoxy)-methan, 1,4-Bis[4,4'-dihydroxytri-phenyl)-methyl]-benzol, in Mengen von 0,01 bis 1,0 Mol-% bezogen auf eingesetzte Diphenole verwendet werden. Phenolische Verzweigungsmittel können mit den Diphenolen vorgelegt, Säurechlorid-Verzweigungsmittel können zusammen mit den Säuredichloriden eingetragen werden.

In den thermoplastischen, aromatischen Polyestercarbonaten kann der Anteil an Carbonatstruktureinheiten beliebig variieren. Vorzugsweise beträgt der Anteil an Carbonatgruppen bis zu 100 Mol-%, insbesondere bis zu 80 Mol-%, besonders bevorzugt bis zu 50 Mol-%, bezogen auf die Summe an Estergruppen und Carbonatgruppen. Sowohl der Ester- als auch der Carbonatanteil der aromatischen Polyestercarbonate kann in Form von Blöcken oder statistisch verteilt im Polykondensat vorliegen.

Die relative Lösungsviskosität (ηᵣₑ₁) der aromatischen Polycarbonate und Polyestercarbonate liegt im Bereich 1,18 bis 1,4, vorzugsweise 1,20 bis 1,32 (gemessen an Lösungen von 0,5 g Polycarbonat oder Polyestercarbonat in 100 ml Methylenchlorid-Lösung bei 25°C).

Die thermoplastischen, aromatischen Polycarbonate und Polyestercarbonate können allein oder im beliebigen Gemisch eingesetzt werden. Sie können in der erfindungsgemäßen Zusammensetzung in einer Menge von vorzugsweise 20 bis 90 Gew.-%, insbesondere 30 bis 85 Gew.-% noch bevorzugter 40 bis 80 Gew.-% und ganz besonders bevorzugt 50 bis 75 Gew.-%, enthalten sein.

### Komponente B

Die Komponente B umfaßt ein oder mehrere Pfropfpolymerisate von
- B. 1: 5 bis 95 Gew.-% , vorzugsweise 30 bis 90 Gew.-%, einer Mischung aus
- B.1.1: 50 bis 99 Gew.-Teilen, insbesondere 50 bis 90, noch bevorzugter 55 bis 85, ganz besonders bevorzugt 60 bis 80 Gew.-Teilen Vinylaromaten und/oder kernsubstituierten Vinylaromaten (wie beispielsweise Styrol, α-Methylstyrol, p-Methylstyrol, p-Chlorstyrol) und/oder Methacrylsäure-(C₁-C₈)-Alkylester (wie Methylmethacrylat, Ethylmethacrylat) und
- B.1.2: 1 bis 50 Gew.-Teilen, insbesondere 10 bis 50, noch bevorzugter 15 bis 45, ganz besonders bevorzugt 20 bis 40 Gew.-Teilen Vinylcyanide (ungesättigte Nitrile wie Acrylnitril und Methacrylnitril) und/oder (Meth)Acrylsäure-(C₁-C₈)-Alkylester (wie Methylmethacrylat, n-Butylacrylat, t-Butylacrylat) und/oder Derivate (wie Anhydride und Imide) ungesättigter Carbonsäuren (beispielsweise Maleinsäureanhydrid und N-Phenyl-Maleinimid) auf
- B.2: 95 bis 5, vorzugsweise 70 bis 10 Gew.-% einer oder mehrerer Pfropfgrundlagen mit Glasübergangstemperaturen <10°C, vorzugsweise <0°C, besonders bevorzugt < -20°C.

Die Pfropfgrundlage B.2 hat im allgemeinen eine mittlere Teilchengröße (d₅₀-Wert) von 0,05 bis 10 µm, vorzugsweise 0,1 bis 5 µm, besonders bevorzugt 0,2 bis 1 µm.

Bevorzugte Monomere B.1.1 sind ausgewählt aus mindestens einem der Monomere Styrol, α-Methylstyrol und Methylmethacrylat, bevorzugte Monomere B.1.2 sind ausgewählt aus mindestens einem der Monomere Acrylnitril, Maleinsäureanhydrid und Methylmethacrylat.

Besonders bevorzugte Monomere sind B.1.1 Styrol und B.1.2 Acrylnitril.

Für die Pfropfpolymerisate B geeignete Pfropfgrundlagen B.2 sind beispielsweise Dienkautschuke, EP(D)M-Kautschuke, also solche auf Basis Ethylen/Propylen und gegebenenfalls Dien, Acrylat-, Polyurethan-, Silikon-, Chloropren und Ethylen/Vinylacetat-Kautschuke.

Bevorzugte Pfropfgrundlagen B.2 sind Dienkautschuke (z. B. auf Basis Butadien, Isopren etc.) oder Gemische von Dienkautschuken oder Copolymerisate von Dienkautschuken oder deren Gemischen mit weiteren copolymerisierbaren Monomeren (z. B. gemäß B.1.1 und B.1.2), mit der Maßgabe, dass die Glasübergangstemperatur der Komponente B.2 unterhalb <10°C, vorzugsweise <0°C, besonders bevorzugt <-10°C liegt.

Besonders bevorzugt ist reiner Polybutadienkautschuk.

Besonders bevorzugte Polymerisate B sind z.B. ABS-Polymerisate (Emulsions-, Masse- und Suspensions-ABS), wie sie z. B. in der DE-A 2 035 390 (=US-PS 3 644 574) oder in der DE-A 2 248 242 (=GB-PS 1 409 275) bzw. in Ullmanns, Enzyklopädie der Technischen Chemie, Bd. 19 (1980), S. 280 ff. beschrieben sind. Der Gelanteil der Pfropfgrundlage B.2 beträgt mindestens 30 Gew.-%, vorzugsweise mindestens 40 Gew.-% (in Toluol gemessen).

Die Pfropfcopolymerisate B werden durch radikalische Polymerisation, z.B. durch Emulsions-, Suspensions-, Lösungs- oder Massepolymerisation, vorzugsweise durch Emulsions- oder Massepolymerisation hergestellt.

Besonders geeignete Pfropfkautschuke sind auch ABS-Polymerisate, die durch Redox-Initiierung mit einem Initiatorsystem aus organischem Hydroperoxid und Ascorbinsäure gemäß US-P 4 937 285 hergestellt werden.

Da bei der Pfropfreaktion die Pfropfmonomeren bekanntlich nicht unbedingt vollständig auf die Pfropfgrundlage aufgepfropft werden, werden erfindungsgemäß unter Pfropfpolymerisaten B auch solche Produkte verstanden, die durch (Co)Polymerisation der Pfropfmonomere in Gegenwart der Pfropfgrundlage gewonnen werden und bei der Aufarbeitung mit anfallen.

Geeignete Acrylatkautschuke gemäß B.2 der Polymerisate B sind vorzugsweise Polymerisate aus Acrylsäurealkylestern, gegebenenfalls auch Copolymerisate mit bis zu 40 Gew.-%, bezogen auf B.2 anderen polymerisierbaren, ethylenisch ungesättigten Monomeren. Zu den bevorzugten polymerisierbaren Acrylsäureestern gehören C₁-C₈-Alkylester, beispielsweise Methyl-, Ethyl-, Butyl-, n-Octyl- und 2-Ethylhexylester; Halogenalkylester, vorzugsweise Halogen-C₁-C₈-alkylester, wie Chlorethylacrylat sowie Mischungen dieser Monomeren.

Zur Vernetzung können Monomere mit mehr als einer polymerisierbaren Doppelbindung copolymerisiert werden. Bevorzugte Beispiele für vernetzende Monomere sind Ester ungesättigter Monocarbonsäuren mit 3 bis 8 C-Atomen und ungesättigter einwertiger Alkohole mit 3 bis 12 C-Atomen, oder gesättigter Polyole mit 2 bis 4 OH-Gruppen und 2 bis 20 C-Atomen, wie Ethylenglykoldimethacrylat, Allylmethacrylat; mehrfach ungesättigte heterocyclische Verbindungen, wie Trivinyl- und Triallylcyanurat; polyfunktionelle Vinylverbindungen, wie Di- und Trivinylbenzole; aber auch Triallylphosphat und Diallylphthalat.

Bevorzugte vernetzende Monomere sind Allylmethacrylat, Ethylenglykoldimethacrylat, Diallylphthalat und heterocyclische Verbindungen, die mindestens drei ethylenisch ungesättigte Gruppen aufweisen.

Besonders bevorzugte vernetzende Monomere sind die cyclischen Monomere Triallylcyanurat, Triallylisocyanurat, Triacryloylhexahydro-s-triazin, Triallylbenzole. Die Menge der vernetzten Monomere beträgt vorzugsweise 0,02 bis 5, insbesondere 0,05 bis 2 Gew.-%, bezogen auf die Pfropfgrundlage B.2.

Bei cyclischen vernetzenden Monomeren mit mindestens drei ethylenisch ungesättigten Gruppen ist es vorteilhaft, die Menge auf unter 1 Gew.-% der Pfropfgrundlage B.2 zu beschränken.

Bevorzugte "andere" polymerisierbare, ethylenisch ungesättigte Monomere, die neben den Acrylsäureestern gegebenenfalls zur Herstellung der Pfropfgrundlage B.2 dienen können, sind z. B. Acrylnitril, Styrol, α-Methylstyrol, Acrylamide, Vinyl-C₁-C₆-alkylether, Methylmethacrylat, Butadien. Bevorzugte Acrylatkautschuke als Pfropfgrundlage B.2 sind Emulsionspolymerisate, die einen Gelgehalt von mindestens 60 Gew.-% aufweisen.

Weitere geeignete Pfropfgrundlagen gemäß B.2 sind Silikonkautschuke mit pfropfaktiven Stellen, wie sie in den DE-A 3 704 657, DE-A 3 704 655, DE-A 3 631 540 und DE-A 3 631 539 beschrieben werden.

Der Gelgehalt der Pfropfgrundlage B.2 wird bei 25°C in einem geeigneten Lösungsmittel bestimmt (M. Hoffmann, H. Krömer, R. Kuhn, Polymeranalytik I und II, Georg Thieme-Verlag, Stuttgart 1977).

Die mittlere Teilchengröße d₅₀ ist der Durchmesser, oberhalb und unterhalb dessen jeweils 50 Gew.-% der Teilchen liegen. Er kann mittels Ultrazentrifugenmessung (W. Scholtan, H. Lange, Kolloid, Z. und Z. Polymere 250 (1972), 782-1796) bestimmt werden.

Die Komponente B kann in der erfindungsgemäßen Zusammensetzung in einer Menge von vorzugsweise 1 bis 50 Gew.-%, besonders bevorzugt 2 bis 30 Gew.-% und in am meisten bevorzugter Weise 4 bis 20 Gew.-%, bezogen auf die Zusammensetzung, enthalten sein.

Bei gleichzeitigem Einsatz von Flammschutzmitteln in der Zusammensetzung kann Komponente B in einer Menge von vorzugsweise 1 bis 30 Gew.-%, besonders bevorzugt 1 bis 20 Gew.-%, noch bevorzugter 2 bis 15 Gew.-% und in am meisten bevorzugter Weise 3 bis 10 Gew.-%, bezogen auf die Zusammensetzung, enthalten sein.

### Komponente C

Die Polymer-Zusammensetzungen enthalten Talk mit einem mittleren Partikeldurchmesser von weniger als 1000 nm, bevorzugt weniger als 800 nm, besonders bevorzugt weniger als 600 nm.

Unter "mittlerem Partikeldurchmesser" im Sinne der Erfindung wird der mittels Sedimentation (Sedigraph 5100) bestimmte d₅₀-Wert verstanden.

Unter Talk wird ein natürlich vorkommender oder synthetisch hergestellter Talk verstanden. Reiner Talk hat die chemische Zusammensetzung 3MgO·4SiO₂·H₂O und somit einen MgO-Gehalt von 31,9 Gew.-%, einen SiO₂-Gehalt von 63,4 Gew.-% und einen Gehalt an chemisch gebundenem Wasser von 4,8 Gew.-%. Es handelt sich um ein Silikat mit Schichtstruktur.

Natürlich vorkommende Talkmaterialien besitzen im allgemeinen nicht die oben aufgeführte Idealzusammensetzung, da sie durch partiellen Austausch des Magnesium durch andere Elemente, durch partiellen Austausch von Silicium, durch beispielsweise Aluminium und/oder durch Verwachsungen mit anderen Mineralien wie Dolomit, Magnesit und Chlorit verunreinigt sind. Auch diese verunreinigten natürlichen Talkpulver können in den erfindungsgemäßen Zusammensetzung zum Einsatz kommen, bevorzugt sind jedoch Talktypen hoher Reinheit. Diese enthalten beispielsweise einen MgO-Gehalt von 28 bis 35 Gew.-%, bevorzugt 30 bis 33 Gew.-%, besonders bevorzugt 30,5 bis 32 Gew.-% und einen SiO₂-Gehalt von 55 bis 65 Gew.-%, bevorzugt 58 bis 64 Gew.-%, besonders bevorzugt 60 bis 62,5 Gew.-%. Bevorzugte Talktypen zeichnen sich des weiteren durch einen Al₂O₃-Gehalt von <5 Gew.-%, besonders bevorzugt von <1 Gew.-%, insbesondere von <0,7 Gew.-% und einen Fe₂O₃-Gehalt von <2 Gew.-%, insbesondere ≤1 Gew.-%, besonders bevorzugt ≤0,8 Gew.-%, ganz besonders bevorzugt <0,6 Gew.-% aus.

Der in der erfindungsgemäßen Zusammensetzung enthaltene Talk kann oberflächenbehandelt, beispielsweise silanisiert sein, um eine bessere Polymerverträglichkeit zu gewährleisten.

Der Talk kann in kompaktierter Form eingesetzt werden, um die Dosierungseigenschaften (Fließverhalten) zu verbessern.

Der Talk kann in der erfindungsgemäßen Zusammensetzung in einer Menge von vorzugsweise 0,1 bis 30 Gew.-%, insbesondere 0,5 bis 15 Gew.-% besonders bevorzugt 1 bis 15 Gew.-% und ganz besonders bevorzugt 5 bis 12 Gew.-%, bezogen auf die Masse der Zusammensetzung, enthalten sein.

### Komponente D

Die Komponente D umfaßt ein oder mehrere thermoplastische Vinyl(Co)Polymerisate D.1 und/oder Polyalkylenterephthalate D.2.

Geeignet sind als Vinyl(Co)Polymerisate D.1 Polymerisate von mindestens einem Monomeren aus der Gruppe der Vinylaromaten, Vinylcyanide (ungesättigte Nitrile), (Meth)Acrylsäure-(C₁ bis C₈)-Alkylester, ungesättigte Carbonsäuren sowie Derivate (wie Anhydride und Imide) ungesättigter Carbonsäuren. Insbesondere geeignet sind (Co)Polymerisate aus
- D.1.1: 50 bis 99, vorzugsweise 60 bis 80 Gew.-Teilen Vinylaromaten und/oder kernsubstituierten Vinylaromaten wie beispielsweise Styrol, α-Methylstyrol, p-Methylstyrol, p-Chlorstyrol) und/oder Methacrylsäure-(C₁ bis C₈)-Alkylester wie Methylmethacrylat, Ethylmethacrylat), und
- D.1.2: 1 bis 50, vorzugsweise 20 bis 40 Gew.-Teilen Vinylcyanide (ungesättigte Nitrile) wie Acrylnitril und Methacrylnitril und/oder (Meth)Acrylsäure-(C₁-C₈)-Alkylester (wie Methylmethacrylat, n-Butylacrylat, t-Butylacrylat) und/oder ungesättigte Carbonsäuren (wie Maleinsäure) und/oder Derivate (wie Anhydride und Imide) ungesättigter Carbonsäuren (beispielsweise Maleinsäureanhydrid und N-Phenyl-Maleinimid).

Die (Co)Polymerisate D.1 sind harzartig, thermoplastisch und kautschukfrei.

Besonders bevorzugt ist das Copolymerisat aus D.1.1 Styrol und D.1.2 Acrylnitril.

Die (Co)Polymerisate gemäß D.1 sind bekannt und lassen sich durch radikalische Polymerisation, insbesondere durch Emulsions-, Suspensions-, Lösungs- oder Massepolymerisation herstellen. Die (Co)Polymerisate besitzen vorzugsweise mittlere Molekulargewichte M_{w} (Gewichtsmittel, ermittelt durch Lichtstreuung oder Sedimentation) zwischen 15.000 und 200.000.

Die Polyalkylenterephthalate der Komponente D.2 sind Reaktionsprodukte aus aromatischen Dicarbonsäuren oder ihren reaktionsfähigen Derivaten, wie Dimethylestern oder Anhydriden, und aliphatischen, cycloaliphatischen oder araliphatischen Diolen sowie Mischungen dieser Reaktionsprodukte.

Bevorzugte Polyalkylenterephthalate enthalten mindestens 80 Gew.-%, vorzugsweise mindestens 90 Gew.-%, bezogen auf die Dicarbonsäurekomponente Terephthalsäurereste und mindestens 80 Gew.-%, vorzugsweise mindestens 90 Mol-%, bezogen auf die Diolkomponente Ethylenglykol- und/oder Butandiol-1,4-Reste.

Die bevorzugten Polyalkylenterephthalate können neben Terephthalsäureresten bis zu 20 Mol-%, vorzugsweise bis zu 10 Mol-%, Reste anderer aromatischer oder cycloaliphatischer Dicarbonsäuren mit 8 bis 14 C-Atomen oder aliphatischer Dicarbonsäuren mit 4 bis 12 C-Atomen enthalten, wie Reste von Phthalsäure, Isophthalsäure, Naphthalin-2,6-dicarbonsäure, 4,4'-Diphenyldicarbonsäure, Bernsteinsäure, Adipinsäure, Sebacinsäure, Azelainsäure, Cyclohexandiessigsäure.

Die bevorzugten Polyalkylenterephthalate können neben Ethylenglykol- bzw. Butandiol-1,4-Resten bis zu 20 Mol-%, vorzugsweise bis zu 10 Mol-%, andere aliphatische Diole mit 3 bis 12 C-Atomen oder cycloaliphatische Diole mit 6 bis 21 C-Atomen enthalten, z. B. Reste von Propandiol-1,3, 2-Ethylpropandiol-1,3, Neopentylglykol, Pentandiol-1,5, Hexandiol-1,6, Cyclohexan-dimethanol-1,4, 3-Ethylpentandiol-2,4, 2-Methylpentandiol-2,4, 2,2,4-Trimethylpentandiol-1,3, 2-Ethylhexandiol-1,3, 2,2-Diethylpropandiol-1,3, Hexandiol-2,5, 1,4-Di-(β-hydroxyethoxy)-benzol, 2,2-Bis-(4-hydroxycyclohexyl)-propan, 2,4-Dihydroxy-1,1,3,3-tetramethyl-cyclobutan, 2,2-Bis-(4-β-hydroxyethoxy-phenyl)-propan und 2,2-Bis-(4-hydroxypropoxyphenyl)-propan (DE-A 2 407 674, 2 407 776, 2 715 932).

Die Polyalkylenterephthalate können durch Einbau relativ kleiner Mengen 3- oder 4-wertiger Alkohole oder 3- oder 4-basischer Carbonsäuren, z. B. gemäß DE-A 1 900 270 und US-PS 3 692 744, verzweigt werden. Beispiele bevorzugter Verzweigungsmittel sind Trimesinsäure, Trimellithsäure, Trimethylolethan und -propan und Pentaerythrit.

Besonders bevorzugt sind Polyalkylenterephthalate, die allein aus Terephthalsäure und deren reaktionsfähigen Derivaten (z.B. deren Dialkylestem) und Ethylenglykol und/oder Butandiol-1,4 hergestellt worden sind, und Mischungen dieser Polyalkylenterephthalate.

Mischungen von Polyalkylenterephthalaten enthalten 1 bis 50 Gew.-%, vorzugsweise 1 bis 30 Gew.-%, Polyethylenterephthalat und 50 bis 99 Gew.-%, vorzugsweise 70 bis 99 Gew.-%, Polybutylenterephthalat.

Die vorzugsweise verwendeten Polyalkylenterephthalate besitzen im allgemeinen eine Grenzviskosität von 0,4 bis 1,5 dl/g, vorzugsweise 0,5 bis 1,2 dl/g, gemessen in Phenol/o-Dichlorbenzol (1:1 Gewichtsteile) bei 25°C im Ubbelohde-Viskosimeter.

Die Polyalkylenterephthalate lassen sich nach bekannten Methoden herstellen (z.B. Kunststoff-Handbuch, Band VIII, S. 695 ff., Carl-Hanser-Verlag, München 1973).

Des weiteren kann als Komponente D ein Pfropfpolymerisat aus 5 bis 95 Gew.-% einer vinylaromatischen Verbindung, wie unter Komponente B beschrieben, auf 95 bis 5 Gew.-% einer Pfropfgrundlage mit einer Glasübergangstemperatur <10°C, vorzugsweise <0°C, besonders bevorzugt <-20°C eingesetzt werden.

Die Komponente D kann in der erfindungsgemäßen Zusammensetzung in einer Menge von vorzugsweise 0 bis 50 Gew.-%, besonders bevorzugt bis zu 40 Gew.-% und in am meisten bevorzugter Weise bis zu 30 Gew.%, enthalten sein.

### Komponente E

Die Zusammensetzungen sind durch Zusatz phoshorhaltiger Verbindungen flammwidrig ausgerüstet.

Der Einsatz von oligomeren Phosphorsäureestern, die sich vom Bisphenol A ableiten (vgl. Formel IVa), ist besonders vorteilhaft, da die mit dieser Phosphorverbindung ausgerüsteten Zusammensetzungen eine besonders hohe Spannungsriss- und Hydrolysebeständigkeit sowie eine besonders geringe Neigung zur Belagsbildung bei der Spritzgussverarbeitung aufweisen. Des weiteren läßt sich mit diesen Flammschutzmitteln eine besonders hohe Wärmeformbeständigkeit erzielen.

Als phosphorhaltige Verbindungen werden Verbindungen der Formel (IVa) eingesetzt 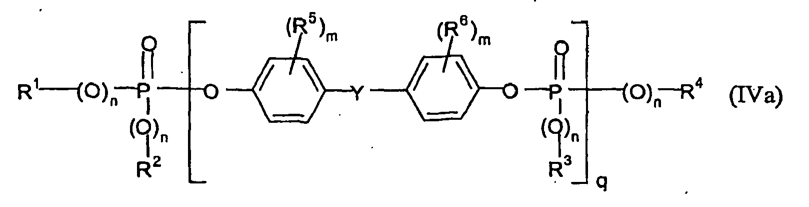 wobei
- R¹, R², R³ und R⁴,: unabhängig voneinander jeweils gegebenenfalls halogeniertes C₁ bis C₈-Alkyl, jeweils gegebenenfalls durch Alkyl, vorzugsweise C₁ bis C₄-Alkyl, und/oder Halogen, vorzugsweise Chlor, Brom, substituiertes C₅ bis C₆-Cycloalkyl, C₆ bis C₂₀-Aryl oder C₁ bis C₁₂-Aralkyl,
- n: unabhängig voneinander, 0 oder 1
- q: 0,3 bis 20 und
- m: unabhängig voneinander 0, 1, 2, 3 oder 4,
- R⁵ und R⁶: unabhängig voneinander C₁ bis C₄-Alkyl, vorzugsweise Methyl oder Ethyl und
- Y: C₁ bis C₇-Alkyliden, C₁-C₇-Alkylen, C₅ bis C₁₂-Cycloalkylen, C₅ bis C₁₂-Cycloalkyliden, -O-, -S-, -SO₂ oder -CO-, vorzugsweise Isopropyliden oder Methylen, bedeuten.

Bevorzugt stehen R¹, R², R³ und R⁴ unabhängig voneinander für C₁ bis C₄-Alkyl, Phenyl, Naphthyl oder Phenyl-C₁-C₄-alkyl. Die aromatischen Gruppen R¹, R², R³ und R⁴ können ihrerseits mit Halogen- und/oder Alkylgruppen, vorzugsweise Chlor, Brom und/oder C₁ bis C₄-Alkyl substituiert sein. Besonders bevorzugte Aryl-Reste sind Kresyl, Phenyl, Xylenyl, Propylphenyl oder Butylphenyl sowie die entsprechenden bromierten und chlorierten Derivate davon.
- n: in der Formel (IV) kann, unabhängig voneinander, 0 oder 1 sein, vorzugsweise ist n gleich 1.
- q: steht für Werte von 0,3 bis 20. Bei Einsatz von Mischungen verschiedener Komponenten der Formel (IVa) können Mischungen vorzugsweise mit zahlengemittelten q-Werten von 0,3 bis 20, besonders bevorzugt 0,5 bis 10, insbesondere 0,5 bis 6 verwendet werden.

Als erfindungsgemäße Komponente E können Oligophosphate (q=1-30) oder Mischungen aus Mono-(q=0) und Oligophosphaten eingesetzt werden.

Monophosphorverbindungen der Formel (IVa) sind insbesondere Tributylphosphat, Tris-(2-chlorethyl)-phosphat, Tris-(2,3-dibromprobyl)-phosphat, Triphenylphosphat, Trikresylphosphat, Diphenylkresylphosphat, Diphenyloctylphosphat, Diphenyl-2-ethylkresylphosphat, Tri-(isopropylphenyl)-phosphat, halogensubstituierte Arylphosphate, Methylphosphönsäuredimethylester, Methylphosphensäurediphenylester, Phenylphosphonsäurediethylester, Triphenylphosphinoxid oder Trikresylphosphinoxid.

Die Phosphorverbindungen gemäß Komponente E sind bekannt (vgl. z.B. EP-A 0 363 608, EP-A 0 640 655) oder lassen sich nach bekannten Methoden in analoger Weise herstellen (z.B. Ullmanns Enzyklopädie der technischen Chemie, Bd. 18, S. 301 ff. 1979; Houben-Weyl, Methoden der organischen Chemie, Bd. 12/1, S. 43; Beilstein Bd. 6, S. 177).

Die mittleren q-Werte können bestimmt werden, indem mittels geeigneter Methode (Gaschromatographie (GC), High Pressure Liquid Chromatography (HPLC), Gelpermeationschromatographie (GPC)) die Zusammensetzung der Phosphat-Mischung (Molekulargewichtsverteilung) bestimmt wird und daraus die Mittelwerte für q berechnet werden.

Die Komponente E kann in der erfindungsgemäßen Zusammensetzung in einer Menge von vorzugsweise 1 bis 40 Gew.-%, besonders bevorzugt 2 bis 30 Gew.-% und in am meisten bevorzugter Weise 2 bis 20 Gew.-%, bezogen auf die Masse der Zusammensetzung, enthalten sein.

### Komponente F

Die Flammschutzmittel entsprechend Komponente E werden oft in Kombination mit sogenannten Antidrippingmitteln verwendet, welche die Neigung des Materials, zum brennenden Abtropfen im Brandfall verringern. Beispielhaft seien hier Verbindungen der Substanzklassen der fluorierten Polyolefine, der Silikone sowie Aramidfasern genannt. Diese können auch in den erfindungsgemäßen Zusammensetzungen zum Einsatz kommen. Bevorzugt werden fluorierte Polyolefine als Antidrippingmittel eingesetzt.

Fluorierte Polyolefine sind bekannt und beispielsweise in der EP-A 0 640 655 beschrieben. Sie werden zum Beispiel unter der Marke Teflon^{®} 30N von DuPont vertrieben.

Die fluorierten Polyolefine können sowohl in reiner Form als auch in Form einer koagulierten Mischung von Emulsionen der fluorierten Polyolefine mit Emulsionen der Pfropfpolymerisate (Komponente B) oder mit einer Emulsion eines Copolymerisats, vorzugsweise auf Styrol/Acrylnitril-Basis eingesetzt werden, wobei das fluorierte Polyolefin als Emulsion mit einer Emulsion des Pfropfpolymerisats oder des Copolymerisats gemischt und anschließend koaguliert wird.

Weiterhin können die fluorierten Polyolefine als Präcompound mit dem Pfropfpolymerisat (Komponente B) oder einem Copolymerisat, vorzugsweise auf Styrol/Acrylnitril-Basis, eingesetzt werden. Die fluorierten Polyolefine werden als Pulver mit einem Pulver oder Granulat des Pfropfpolymerisats oder Copolymerisats vermischt und in der Schmelze im allgemeinen bei Temperaturen von 200 bis 330°C in üblichen Aggregaten wie Innenknetern, Extrudern oder Doppelwellenschnecken compoundiert.

Die fluorierten Polyolefine können auch in Form eines Masterbatches eingesetzt werden, der durch Emulsionspolymerisation mindestens eines monoethylenisch ungesättigten Monomers in Gegenwart einer wässrigen Dispersion des fluorierten Polyolefins hergestellt wird. Bevorzugte Monomerkomponenten sind Styrol, Acrylnitril und deren Gemische. Das Polymerisat wird nach saurer Fällung und nachfolgender Trocknung als rieselfähiges Pulver eingesetzt.

Die Koagulate, Präcompounds oder Masterbatches besitzen üblicherweise Feststoffgehalte an fluoriertem Polyolefin von 5 bis 95 Gew.-%, vorzugsweise 7 bis 60 Gew.-%.

Die Komponente F kann in der erfindungsgemäßen Zusammensetzung in einer Menge von vorzugsweise 0,05 bis 10 Gew.-%, besonders bevorzugt 0,1 bis 5 Gew.-% und in am meisten bevorzugter Weise 0,1 bis 4 Gew.-%, bezogen auf die Masse der Zusammensetzung, enthalten sein.

### Komponente G (Weitere Zusätze)

Die erfindungsgemäßen Zusammensetzungen können weiterhin wenigstens eines der üblichen Additive, wie Gleit- und Entformungsmittel, beispielsweise Pentaerythrittetra-stearat, Nukleiermittel, Antistatika, Stabilisatoren, und weitere Füll- und Verstärkungsstoffe sowie Farbstoffe und Pigmente enthalten.

Die erfindungsgemäßen Zusammensetzungen können bis zu 35 Gew.-%, bezogen auf die Gesamt-Zusammensetzung, eines weiteren, gegebenenfalls synergistisch wirkenden Flammschutzmittels enthalten. Beispielhaft werden als weitere Flammschutzmittel Silikone, organische Halogenverbindungen wie Decabrombisphenylether, Tetrabrombisphenol, anorganische Halogenverbindungen wie Ammoniumbromid, Stickstoffverbindungen, wie Melamin, Melaminformaldehyd-Harze, anorganische Hydroxidverbindungen wie Mg-, Al-Hydroxid, anorganische Verbindungen wie Antimonoxide, Bariummetaborat, Hydroxoantimonat, Zirkonoxid, Zirkonhydroxid, Molybdenoxid, Ammoniummolybdat, Zinkborat, Ammoniumborat, Bariummetaborat, Talk, Silikat, Siliziumoxid und Zinnoxid sowie Siloxanverbindungen genannt.

Die Summe der Gew.-% aller Komponenten ergibt 100.

Die erfindungsgemäßen Zusammensetzungen werden hergestellt, indem man die jeweiligen Bestandteile in bekannter Weise vermischt und bei Temperaturen von 200°C bis 300°C in üblichen Aggregaten wie Innenknetern, Extrudern und Doppelwellenschnecken schmelzcompoundiert und schmelzextrudiert.

Die Vermischung der einzelnen Bestandteile kann in bekannter Weise sowohl sukzessive als auch simultan erfolgen, und zwar sowohl bei etwa 20°C (Raumtemperatur) als auch bei höherer Temperatur.

Die erfindungsgemäßen Zusammensetzungen können zur Herstellung von Formkörpern jeder Art verwendet werden. Diese können beispielsweise durch Spritzguß, Extrusion und Blasformverfahren hergestellt werden. Eine weitere Form der Verarbeitung ist die Herstellung von Formkörpern durch Tiefziehen aus zuvor hergestellten Platten oder Folien.

Beispiele für solche Formkörper sind Folien, Profile, Gehäuseteile jeder Art, z.B. für Haushaltsgeräte wie Saftpressen, Kaffeemaschinen, Mixer; für Büromaschinen wie Monitore, Drucker, Kopierer; weiterhin Platten, Rohre, Elektroinstallationskanäle, Profile für den Bausektor, Innenausbau und Außenanwendungen; Teile aus dem Gebiet der Elektrotechnik wie Schalter und Stecker sowie Automobilinnen- und - außenteile.

Insbesondere können die erfindungsgemäßen Zusammensetzungen beispielsweise zur Herstellung von folgenden Formkörpern oder Formteilen verwendet werden:

Innenausbauteile für Schienenfahrzeuge, Schiffe, Flugzeuge, Busse und Automobile, Radkappen, Gehäuse von Kleintransformatoren enthaltenden Elektrogeräten, Gehäuse für Geräte zur Informationsverbreitung und -Übermittlung, Gehäuse und Verkleidung für medizinische Zwecke, Massagegeräte und Gehäuse dafür, Spielfahrzeuge für Kinder, Flächige Wandelemente, Gehäuse für Sicherheitseinrichtungen, Heckspoiler, Karosserieteile für KFZ, Wärmeisolierte Transportbehältnisse, Vorrichtung zur Haltung oder Versorgung von Kleintieren, Formteile für Sanitär- und Badausrüstungen, Abdeckgitter für Lüfteröffnungen, Formteile für Garten- und Gerätehäuser, Gehäuse für Gartengeräte.

Die folgenden Beispiele dienen der weiteren Erläuterung der Erfindung.

### Beispiele

Die in der Tabelle 1 angegebenen und nachfolgend kurz erläuterten Komponenten werden auf einer ZSK-25 bei 240°C (V1 und 1) bzw. 260°C (V2, V3 und 2) compoundiert. Die Formkörper werden auf einer Spritzgießmaschine Typ Arburg 270 E bei 240°/260°C hergestellt.

### Komponente A1

Lineares Polycarbonat auf Basis Bisphenol A mit einer relativen Lösungsviskosität von 1,24, gemessen in CH₂Cl₂ als Lösungsmittel bei 25°C und einer Konzentration von 0,5 g/100 ml.

### Komponente A2

Lineares Polycarbonat auf Basis Bisphenol A mit einer relativen Lösungsviskosität von 1,28, gemessen in CH₂Cl₂ als Lösungsmittel bei 25°C und einer Konzentration von 0,5 g/100 ml.

### Komponente B

Pfropfpolymerisat von 40 Gew.-Teilen eines Copolymerisats aus Styrol und Acrylnitril im Verhältnis von 73:27 auf 60 Gew.-Teile teilchenförmigen vernetzten Polybutadienkautschuks (mittlerer Teilchendurchmesser d₅₀ = 0,3 µm), hergestellt durch Emulsionspolymerisation.

### Komponente C1

Naintsch A3 (Naintsch Mineralwerke GmbH, Graz, Österreich) Talk mit einem mittleren Partikeldurchmesser (d₅₀) It. Herstellerangabe von 1,2 µm.

### Komponente C2

HiTalc Premium HTP ultra 5 (IMI Fabi S.p.A., Italien) Kompaktierter Talk mit einem mittleren Partikeldurchmesser (d₅₀) It. Herstellerangabe von 0,5 µm.

### Komponente C3

HiTalc Premium HTP ultra 10 (IMI Fabi S.p.A., Italien) Talk mit einem mittleren Partikeldurchmesser (d₅₀) 1t. Herstellerangabe von 1,1 µm.

Alle Komponenten C1 bis C3 sind vermahlene, natürliche Mineralien mit einem Talkgehalt von ≥98 Gew.-%. Der Al₂O₃-Gehalt aller Typen liegt 1t. Herstellerangaben bei ≤1 Gew.-%, der mittels Röntgenfluoreszenzspektroskopie bestimmte Fe₂O₃-Gehalt aller Materialien liegt bei ≤0,5 Gew.-%.

### Komponente D

Styrol/Acrylnitril-Copolymerisat mit einem Styrol/Acrylnitril-Gewichtsverhältnis von 72:28 und einer Grenzviskosität von 0,55 dl/g (Messung in Dimethylformamid bei 20°C).

### Komponente E

Auf Bisphenol-A basierendes Oligophosphat

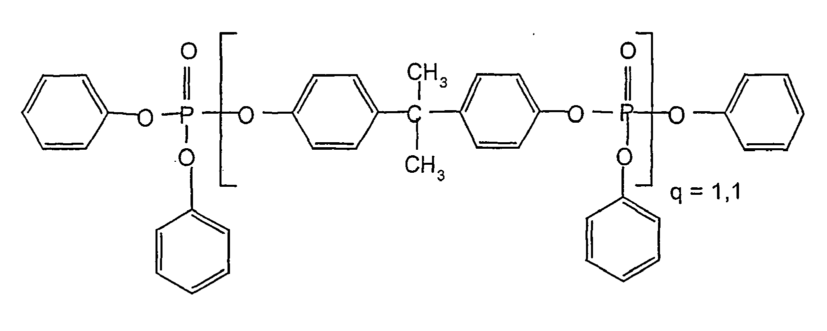

### Komponente F

Tetrafluorethylenpolymerisat als koagulierte Mischung aus einer ABS-Pfropfpolymerisat-Emulsion gemäß oben genannter Komponente B in Wasser und einer Tetrafluorethylenpolymerisat-Emulsion in Wasser. Das Gewichtsverhältnis Pfropfpolymerisat B zum Tetrafluorethylenpolymerisat in der Mischung ist 90 Gew.-% zu 10 Gew.-%. Die Tetrafluorethylenpolymerisat-Emulsion besitzt einen Feststoffgehalt von 60 Gew.-%; der mittlere Teilchendurchmesser liegt zwischen 0,05 und 0,5 µm. Die ABS-Pfropfpolymerisat-Emulsion besitzt einen Feststoffgehalt von 34 Gew.-%.

Die Emulsion des Tetrafluorethylenpolymerisats (Teflon® 30 N von DuPont) wird mit der Emulsion des ABS-Pfropfpolymerisats B vermischt und mit 1,8 Gew.-%, bezogen auf Polymerfeststoff, phenolischer Antioxidantien stabilisiert. Bei 85 bis 95°C wird die Mischung mit einer wäßrigen Lösung von MgSO₄ (Bittersalz) und Essigsäure bei pH 4 bis 5 koaguliert, filtriert und bis zur praktischen Elektrolytfreiheit gewaschen, anschließend durch Zentrifugation von der Hauptmenge Wasser befreit und danach bei 100°C zu einem Pulver getrocknet.

### Komponente G1

Pentaerithrithtetrastearat (PETS) als Entformungsmittel

### Komponente G2

Phosphitstabilisator

### Untersuchung der Eigenschaften der erfindungsgemäßen Formmassen

Die Bestimmung der Kerbschlagzähigkeit aₖ und der Schlagzähigkeit an wird gemäß ISO 180/1 A bzw. ISO 180/1 U durchgeführt. Zur Bestimmung der Temperatur des Zäh/Sprödübergangs werden die Kerbschlagzähigkeiten aₖ bei verschiedenen Temperaturen gemessen und beurteilt. Ausgehend von der Raumtemperatur wird die Prüftemperatur dazu in Schritten von 5° solange erniedrigt bis ein Sprödbruch beobachtet wird.

Zur Ermittlung der Bindenahtfestigkeit wird gemäß ISO 179/1eU die Schlagzähigkeit an der Bindenaht von beidseitig angespritzten Prüfkörpern (Verarbeitungstemperatur: 240/260°C) der Dimension 170 x 10 x 4 mm gemessen.

Der E-Modul und die Reißdehnung wurden im Zugversuch nach ISO 527 bestimmt.

Das Brandverhalten der flammwidrigen Proben wurde nach UL-Subj. 94 V an Stäben der Abmessung 127 x 12,7 x 1,2 mm gemessen, welche auf einer Spritzgußmaschine bei 260°C hergestellt wurden.

### Beispiele 1 und 2 und Vergleichsbeispiele V1 bis V3

### Tabelle 1

Zusammensetzung und Eigenschaften

| **Beispiel/ Komponenten** | | **V1** | **1** | **V2** | **V3** | **2** |
|---|---|---|---|---|---|---|
| | | | | | | |
| A1 | Polycarbonat | 63,2 | 63,2 | | | |
| A2 | Polycarbonat | | | 55,11 | 55,11 | 55,11 |
| B | Pfropfpolymerisat | 4,9 | 4,9 | 14,7 | 14,7 | 14,7 |
| C1 | Talk | 9,8 | | 7,35 | | |
| | | | | | | |
| C2 | Talk | | 9,8 | | | 7,35 |
| C3 | Talk | | | | 7,35 | |
| D | Styrol/Acrylnitril-Copolymerisat | 4,9 | 4,9 | 22,04 | 22,04 | 22,04 |
| E | Oligophosphat | 12,8 | 12,8 | | | |
| F | Teflon-Masterbatch | 3,9 | 3,9 | | | |
| G1 | Entformungsmittel | 0,4 | 0,4 | 0,69 | 0,69 | 0,69 |
| G2 | Stabilisator | 0,1 | 0,1 | 0,11 | 0,11 | 0,11 |
| | | | | | | |
| **Eigenschaften:** | | | | | | |
| | | | | | | |
| aₖ (RT) | [kJ/m²] | - | - | 42,59 | 50,63 | 55,14 |
| Zäh-/Sprödübergang | [°C] | - | - | 5 | -5 | -10 |
| aₙ (RT) | [kJ/m²] | 123 | 164 | - | - | - |
| aₙ Bindenahtfestigkeit (RT) | [kJ/m²] | 3 | 5 | 4 | 5 | 5 |
| E-Modul (RT) | [GPa] | 3,9 | 3,9 | 3,1 | 3,1 | 3,1 |
| Reißdehnung (RT) | [%] | 12,0 | 13,4 | 58,1 | 93,3 | 99,2 |
| UL 94 V @ 1,2 mm | | V-0 | V-0 - | - | - | - |

Aus den Ergebnissen geht hervor, dass die erfindungsgemäßen Zusammensetzungen 1 und 2 gegenüber den Vergleichszusammensetzungen V1 bis V3 eine deutlich verbesserte Zähigkeit, Reißdehnung und Bindenahtfestigkeit aufweisen.

Überraschenderweise erwies sich die Schmelzefließfähigkeit als unabhängig von der Partikelgröße des Talks.

## Patentansprüche

1. Polycarbonat-Zusammensetzung bestehend aus
(A) mindestens ein aromatisches Polycarbonat und/oder Polyestercarbonat,
(B) mindestens ein Pfropfpolymerisat von 5 bis 95 Gew.-% einer Mischung aus 50 bis 99 Gew.-Teilen Vinylaromaten und/oder kernsubstituierten Vinylaromaten und/oder Methacrylsäure-(C₁-C₈)-Alkylester und 1 bis 50 Gew.-Teilen Vinylcyanide und/oder (Meth)-Acrylsäure-(C₁-C₈)-Alkylester und/oder Derivate ungesättigter Carbonsäuren auf 95 bis 5 Gew.-% mindestens einer Pfropfgrundlage mit einer Glastemperatur kleiner etwa 10°C,
(C) mindestens einen Talk mit einem mittleren Partikeldurchmesser von weniger als 1000 nm,
(D) gegebenenfalls ein Vinyl(Co)Polymerisat und/oder Polyalkylenterephthalat,
(E) eine phosphorhaltige Verbindung der allgemeinen Formel IVa 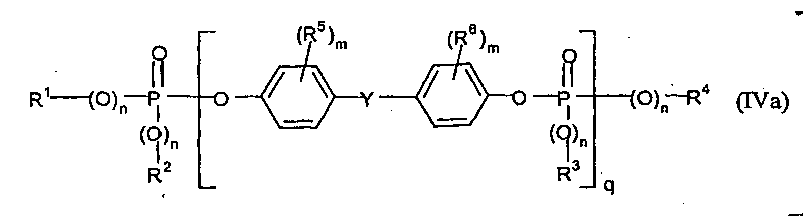
R¹, R², R³ und R⁴, unabhängig voneinander jeweils gegebenenfalls halogeniertes C₁ bis C₈-Alkyl, jeweils gegebenenfalls durch Alkyl, und/oder Halogen, substituiertes C₅ bis C₆-Cycloalkyl, C₆ bis C₂₀-Aryl oder C₇ bis C₁₂-Aralkyl,
n unabhängig voneinander, 0 oder 1,
q eine Zahl zwischen 0,3 und 20,
m unabhängig voneinander 0, 1, 2, 3 oder 4,
R⁵ und R⁶ unabhängig voneinander C₁ bis C₄-Alkyl, vorzugsweise Methyl oder Ethyl und
Y C₁ bis C₇-Alkyliden, C₁-C₇-Alkylen, C₅ bis C₁₂-Cycloalkylen, C₅ bis C₁₂-Cycloalkyliden, -O-, -S-, -SO₂ oder -CO-, vorzugsweise Isopropyliden oder Methylen, bedeuten.
(F) gegebenenfalls ein Antidrippingmittel ausgewählt aus der Gruppe bestehend aus fluorierten Polyolefinen, Silikonen und Aramiden, und
(G) gegebenenfalls mindestens ein weiteres Polymer-Additiv, ausgewählt aus Gleit- und Entformungsmitteln, Nukleiermitteln, Antistatika, Stabilisatoren, Füll- und Verstärkungsstoffe, Farbstoffen und Pigmenten, FR-Synergisten, wobei die. FR-Synergisten ausgewählt sind aus der Gruppe der Decabrombisphenylether, Tetrabrombisphenol, Ammoniumbromid, Melamin, Melaminformaldehyd-Harze, Mg-, Al-Hydroxid, Antimonoxide, Bariummetaborat, Hydroxoantimonat, Zirkonoxid, Zirkonhydroxid, Molybdenoxid, Ammoniummolybdat, Zinkborat, Ammoniumborat, Bariummetaborat, Silikat, Siliziumoxid und Zinnoxid sowie Siloxanverbindungen.

2. Zusammensetzung nach Anspruch 1, worin Komponente A in einer Menge von 20 bis 90 Gew.-%, bezogen auf die Masse der Zusammensetzung, enthalten ist.

3. Zusammensetzung nach Anspruch 1 oder 2, worin das Pfropfpolymerisat als Pfropfhülle eine Mischung aus Styrol und Acrylnitril besitzt.

4. Zusammensetzung nach einem der Ansprüche 1 bis 3, worin die Pfropfgrundlage ein Dien-, EP(D)M-, Acrylat-, Polyurethan-, Silikon-, Chloropren oder Ethylen/Vinylacetat-Kautschuk oder eine Mischung hieraus ist.

5. Zusammensetzung nach einem der Ansprüche 1 bis 4, worin als Pfropf polymerisat ein Emulsions- oder Masse-ABS oder eine Mischung derselben enthalten sind.

6. Zusammensetzung nach einem der Ansprüche 1 bis 5, worin Komponente B in einer Menge von 1 bis 50 Gew.-%, bezogen auf die Masse der Zusammensetzung, enthalten ist.

7. Zusammensetzung nach einem der Ansprüche 1 bis 6, worin Komponente B in einer Menge von 2 bis 30 Gew.-%, bezogen auf die Masse der Zusammensetzung, enthalten ist.

8. Zusammensetzung nach einem der Ansprüche 1 bis 7, worin der Talk einen mittleren Partikeldurchmesser von weniger als 800 nm aufweist.

9. Zusammensetzung nach einem der Ansprüche 1 bis 8, worin der Talk einen mittleren Partikeldurchmesser von weniger als 600 nm aufweist.

10. Zusammensetzung nach einem der Ansprüche 1 bis 9, worin der Talk in einer Menge von 0,1 bis 30 Gew.-%, bezogen auf die Masse der Zusammensetzung, enthalten ist.

11. Zusammensetzung nach einem der Ansprüche 1 bis 10, worin der Talk in einer Menge von 1 bis 15 Gew.-%, bezogen auf die Masse der Zusammensetzung, enthalten ist.

12. Zusammensetzung nach Anspruch 1, worin Komponente D in einer Menge von 0 bis 50 Gew.-%, bezogen auf die Masse der Zusammensetzung, enthalten ist.

13. Polycarbonat-Zusammensetzung nach Anspruch 1, die als Flammschutzmittel eine Verbindung der Formel 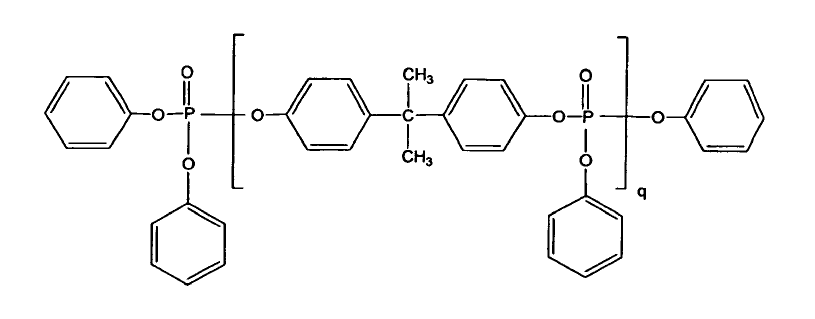 mit q = 0,5 bis 30 enthält.

14. Zusammensetzung nach Anspruch 1 oder 13, worin Komponente E in einer Menge von 1 bis 40 Gew.-%, bezogen auf die Masse der Zusammensetzung, enthalten ist.

15. Zusammensetzung nach einem der Ansprüche 1, 13 oder 14, worin Komponente B in einer Menge von 2 bis 10 Gew.-%, bezogen auf die Masse der Zusammensetzung, enthalten ist.

16. Verfahren zur Herstellung einer Zusammensetzung nach einem der Ansprüche 1 bis 15, worin die Komponenten A bis C und E sowie gegebenenfalls weitere Komponenten miteinander vermischt und bei Temperaturen von 200 bis 300°C in üblichen Aggregaten wie Innenknetern, Extrudern und Doppelwellenschnecken schmelzcompoundiert oder schmelzextrudiert werden.

17. Verwendung einer Zusammensetzung nach einem der Ansprüche 1 bis 15 zur Herstellung von Formkörpern.

18. Formkörper, enthaltend eine Zusammensetzung nach einem der Ansprüche 1 bis 15.

19. Formkörper nach Anspruch 18, wobei der Formkörper eine Folie, ein Profil, ein Innenausbauteil für ein Schienenfahr-, See-, Luft- oder Kraftfahrzeug, ein Karosserieteil für Kraftfahrzeuge, ein Gehäuse von einem einen Kleintransformator enthaltendem Elektrogerät, ein Gehäuse für Geräte zur Informationsverbreitung und -übermittlung, ein Gehäuse oder Verkleidung für medizinisches Gerät, ein Spielfahrzeug für Kinder, ein flächiges Wandelement, ein Gehäuse für eine Sicherheitseinrichtung, ein wärmeisoliertes Transportbehältnis, eine Vorrichtung zur Haltung oder Versorgung von Kleintieren, ein Formteil für Sanitär- und Badausrüstungen, ein Abdeckgitter für Lüfteröffnungen, eine Platte, ein Rohr, ein Elektroinstallationskanal im Innenausbau und für Außenanwendungen, ein Formteil für Garten- und Gerätehäuser oder ein Gehäuse für Gartengeräte ist.

## Claims

1. Polycarbonate composition comprising
(A) at least one aromatic polycarbonate and/or polyester-carbonate,
(B) at least one graft polymer of 5 to 95 wt.% of a mixture of 50 to 99 parts by wt. of vinylaromatics and/or vinylaromatics substituted on the nucleus and/or methacrylic acid (C₁-C₈)-alkyl esters and 1 to 50 parts by wt. of vinyl cyanides and/or (meth)acrylic acid (C₁-C₈)-alkyl esters and/or derivatives of unsaturated carboxylic acids, on 95 to 5 wt.% of at least one graft base with a glass transition temperature of below about 10°C,
(C) at least one talc with an average particle diameter of less than 1,000 nm,
(D) optionally a vinyl(co)polymer and/or polyalkylene terephthalate,
(E) a phosphorus-containing compound of the general formula IVa 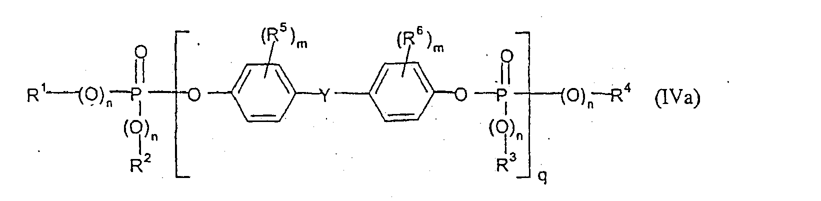
R¹, R², R³ and R⁴ independently of one another each denote optionally halogenated C₁ to C₈-alkyl, or C₅ to C₆-cycloalkyl, C₆ to C₂₀-aryl or C₇ to C₁₂-aralkyl, in each case optionally substituted by alkyl and/or halogen,
n independently of one another, denotes 0 or 1,
q denotes a number between 0.3 and 20,
m independently of one another, denotes 0, 1, 2, 3 or 4,
R⁵ and R⁶ independently of one another denote C₁ to C₄-alkyl, preferably methyl or ethyl, and
Y denotes C₁ to C₇-alkylidene, C₁-C₇-alkylene, C₅ to C₁₂-cycloalkylene, C₅ to C₁₂-cycloalkylidene, -O-, -S-, -SO₂- or
- CO-, preferably isopropylidene or
methylene,
(F) optionally an anti-dripping agent chosen from the group consisting of fluorinated polyolefins, silicones and aramids, and
(G) optionally at least one further polymer additive chosen from lubricants and mould release agents, nucleating agents, antistatics, stabilizers, fillers and reinforcing substances, dyestuffs and pigments and FR synergists, the FR synergists being chosen from the group consisting of decabromobisphenyl ether, tetrabromobisphenol, ammonium bromide, melamine, melamine-formaldehyde resins, Mg hydroxide, Al hydroxide, antimony oxides, barium metaborate, hydroxoantimonate, zirconium oxide, zirconium hydroxide, molybdenum oxide, ammonium molybdate, zinc borate, ammonium borate, barium metaborate, silicate, silicon oxide and tin oxide, and siloxane compounds.

2. Composition according to claim 1, which comprises component A in an amount of 20 to 90 wt.%, based on the weight of the composition.

3. Composition according to claim 1 or 2, wherein the graft polymer has a mixture of styrene and acrylonitrile as the graft shell.

4. Composition according to one of claims 1 to 3, wherein the graft base is a diene, EP(D)M, acrylate, polyurethane, silicone, chloroprene or ethylene/vinyl acetate rubber or a mixture thereof.

5. Composition according to one of claims 1 to 4, which comprises an emulsion or bulk ABS or a mixture thereof as the graft polymer.

6. Composition according to one of claims 1 to 5, which comprises component B in an amount of 1 to 50 wt.%, based on the weight of the composition.

7. Composition according to one of claims 1 to 6, which comprises component B in an amount of 2 to 30 wt.%, based on the weight of the composition.

8. Composition according to one of claims 1 to 7, wherein the talc has an average particle diameter of less than 800 nm.

9. Composition according to one of claims 1 to 8, wherein the talc has an average particle diameter of less than 600 nm.

10. Composition according to one of claims 1 to 9, which comprises the talc in an amount of 0.1 to 30 wt.%, based on the weight of the composition.

11. Composition according to one of claims 1 to 10, which comprises the talc in an amount of 1 to 15 wt.%, based on the weight of the composition.

12. Composition according to claim 1, which comprises component D in an amount of 0 to 50 wt.%, based on the weight of the composition.

13. Polycarbonate composition according to claim 1, which comprises as the flameproofing agent a compound of the formula 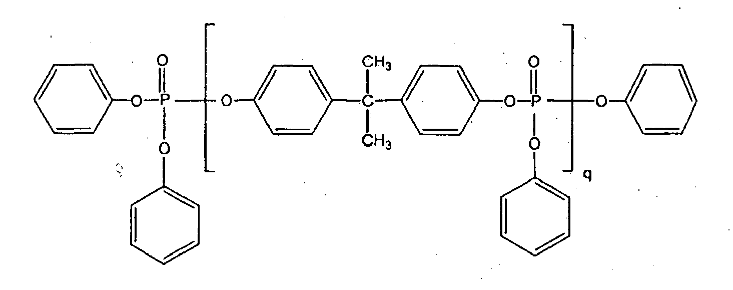 where q = 0.5 to 30.

14. Composition according to claim 1 or 13, which comprises component E in an amount of 1 to 40 wt.%, based on the weight of the composition.

15. Composition according to one of claims 1, 13 or 14, which comprises component B in an amount of 2 to 10 wt.%, based on the weight of the composition.

16. Process for the preparation of a composition according to one of claims 1 to 15, wherein components A to C and E and optionally further components are mixed with one another and the mixture is subjected to melt compounding or melt extrusion at temperatures.of 200 to 300°C in conventional units, such as internal kneaders, extruders and twin-screw extruders.

17. Use of a composition according to one of claims 1 to 15 for the production of shaped articles.

18. Shaped articles comprising a composition according to one of claims 1 to 15.

19. Shaped articles according to claim 18, wherein the shaped article is a film, a profile, an internal fitting for a rail, sea, air or motor vehicle, a vehicle body component for motor vehicles, a housing of an electrical appliance containing a small transformer, a housing for equipment for information processing and transmission, a housing or lining for medical equipment, a toy vehicle for children, a flat wall element, a housing for a safety device, a thermally insulated transportation container, a device for housing or care of small animals, a moulding for sanitary and bath equipment, a cover grid for fan openings, a sheet, a pipe, an electrical installation conduit in interior fitting-out and for exterior uses, a moulding for summerhouses and tool sheds or a housing for garden equipment.

## Revendications

1. Composition à base de polycarbonate consistant en
(A) au moins un polycarbonate et/ou polyester-carbonate aromatique,
(B) au moins un polymère greffé de 5 à 95 % en poids d'un mélange de 50 à 99 parties en poids de composés vinylaromatiques et/ou de composés vinylaromatiques substitués dans les noyaux et/ou de méthacrylates d'alkyle en C₁-C₈ et 1 à 50 parties en poids de cyanures de vinyle et/ou de (méth)acrylates d'alkyle en C₁-C₈ et/ou de dérivés d'acides carboxyliques insaturés sur 95 à 5 % en poids d'au moins un support de greffage ayant une température de transition du second ordre inférieure à 10°C environ,
(C) au moins un talc à un diamètre de particule moyen inférieur à 1 000 nm,
(D) le cas échéant un (co)polymère vinylique et/ou un téréphtalate de polyalkylène,
(E) un composé phosphoré de formule générale (IVa) : 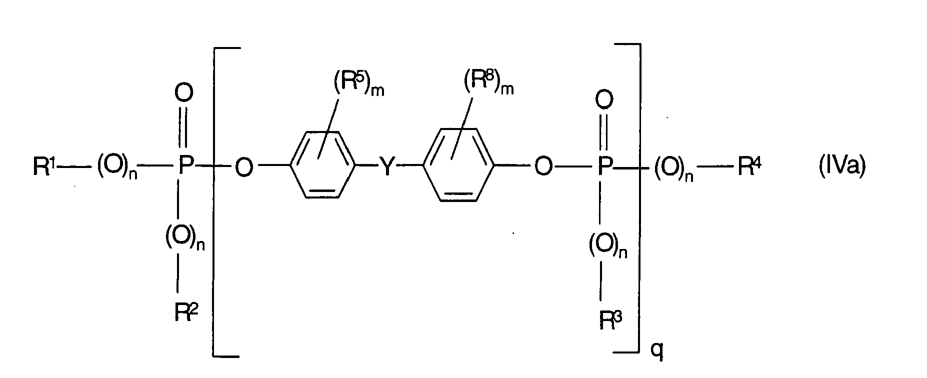 dans laquelle
R¹, R², R³ et R⁴ représentent chacun, indépendamment les uns des autres, un groupe alkyle en C₁-C₈ éventuellement halogéné, un groupe cycloalkyle en C₅-C₆, aryle en C₆-C₂₀ ou aralkyle en C₇-C₁₂, chacun d'eux éventuellement substitué par des groupes alkyle et/ou des halogènes,
les indices n sont égaux chacun, indépendamment les uns des autres, à 0 ou 1,
q est un nombre allant de 0,3 à 20,
les indices m sont égaux chacun, indépendamment l'un de l'autre, à 0, 1, 2, 3 ou 4,
R⁵ et R⁶ représentent chacun, indépendamment l'un de l'autre, un groupe alkyle en C₁-C₄, de préférence méthyle ou éthyle et,
Y représente un groupe alkylidène en C₁-C₇, alkylène en C₁-C₇, cycloalkylène en C₅-C₁₂, cycloalkylidène en C₅-C₁₂, -O-, -S-, -SO₂- ou -CO-, de préférence un groupe isopropylidène ou méthylène,
(F) le cas échéant un agent antigouttage choisi dans le groupe consistant en les polyoléfines fluorées, les silicones et les Aramides, et
(G) le cas échéant au moins un autre additif pour polymères, choisi parmi les agents lubrifiants et agents de démoulage, les agents de nucléation, les agents antistatiques, les stabilisants, les matières de charge et matières renforçantes, les colorants et pigments, les synergistes pour agents ignifugeants, ces synergistes étant choisis dans le groupe consistant en l'éther décabromobisphénylique, le tétrabromobisphénol, le bromure d'ammonium, la mélamine, les résines mélamine-formaldéhyde, les hydroxydes de magnésium, d'aluminium, les oxydes d'antimoine, le métaborate de baryum, un hydroxoantimoniate, l'oxyde de zirconium, l'hydroxyde de zirconium, l'oxyde de molybdène, le molybdate d'ammonium, le borate de zinc, le borate d'ammonium, le métaborate de baryum, un silicate, la silice et l'oxyde d'étain ainsi que des siloxanes.

2. Composition selon la revendication 1, contenant le composant (A) en quantité de 20 à 90 % de son poids total.

3. Composition selon la revendication 1 ou 2, dans laquelle le polymère greffé contient en tant qu'enveloppe de greffage un mélange de styrène et d'acrylonitrile.

4. Composition selon l'une des revendications 1 à 3, dans laquelle le support de greffage est un caoutchouc diénique, un caoutchouc EP(D)M-, un caoutchouc d'acrylate, un caoutchouc de polyuréthane, un caoutchouc de silicone, un caoutchouc de chloroprène ou un caoutchouc d'éthylène/acétate de vinyle, ou un mélange de ces caoutchoucs.

5. Composition selon l'une des revendications 1 à 4 dans laquelle le polymère greffé est un polymère ABS préparé en émulsion ou en masse ou un mélange de tels polymères.

6. Composition selon l'une des revendications 1 à 5, contenant le composant B en quantité de 1 à 50 % en poids de son poids total.

7. Composition selon l'une des revendications 1 à 6, contenant le composant (B) en quantité de 2 à 30 % de son poids total.

8. Composition selon l'une des revendications 1 à 7, dans laquelle le talc a un diamètre de particule moyen inférieur à 800 nm.

9. Composition selon l'une des revendications 1 à 8, dans laquelle le talc a un diamètre de particule moyen inférieur à 600 nm.

10. Composition selon l'une des revendications 1 à 9, contenant le talc en quantité de 0,1 à 30 % de son poids total.

11. Composition selon l'une des revendications 1 à 10, contenant le talc en quantité de 1 à 15 % de son poids total.

12. Composition selon revendication 1 contenant le composant D en quantité de 0 à 50 % de son poids total.

13. Composition à base de polycarbonate selon revendication 1 contenant en tant qu'agent ignifugeant un composé de formule : 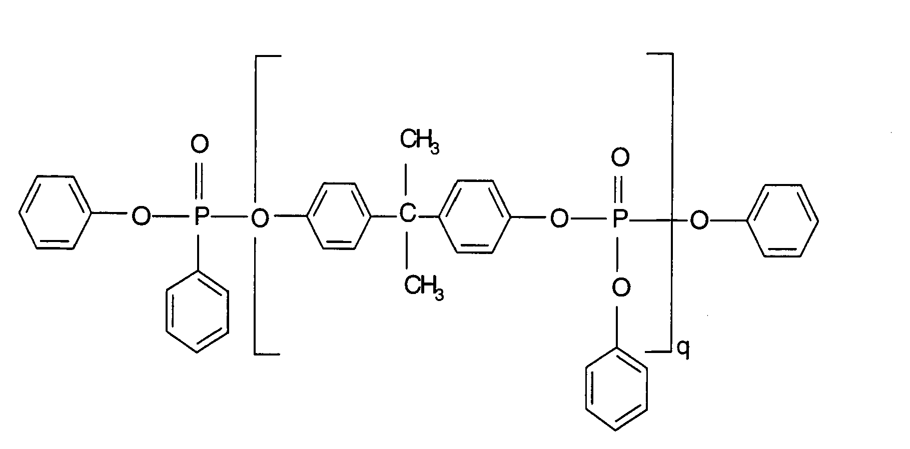 dans laquelle q = 0,5 à 30.

14. Composition selon revendication 1 ou 13, contenant le composant E en quantité de 1 à 40 % de son poids total.

15. Composition selon l'une des revendications 1, 13 ou 14, contenant le composant B en quantité de 2 à 10 % de son poids total.

16. Procédé pour la préparation d'une composition selon l'une des revendications 1 à 15, selon lequel on mélange entre eux les composants A à C et E et le cas échéant d'autres composants et on les homogénéise ou on les extrude à l'état fondu à des températures de 200 à 300°C dans des appareils usuels tels que des malaxeurs internes, des extrudeuses et des appareils à deux vis.

17. Utilisation d'une composition selon l'une des revendications 1 à 15, pour la fabrication d'objets moulés.

18. Objets moulés contenant une composition selon l'une des revendications 1 à 15.

19. Objets moulés selon revendication 18 consistant en une feuille, un profilé, une pièce de construction intérieure pour véhicule ferroviaire, maritime, aérien ou routier, des pièces de carrosserie pour véhicule routier, un logement d'un appareil électrique contenant un petit transformateur, un logement pour appareils servant à l'enregistrement et la transmission de données, un logement ou un habillage pour appareil médicinal, un véhicule-jouet pour enfant, un élément de paroi planiforme, un logement pour un dispositif de sécurité, un récipient isolé servant à des transports, une installation pour la garde ou l'entretien de petits animaux, une pièce moulée pour installation sanitaire et salle de bains, une grille de couverture pour orifice d'aération, une plaque, un tube, un canal d'installation électrique dans la construction intérieure et pour des applications extérieures, une pièce moulée pour resserres de jardin et resserres à outils ou un logement pour outils de jardin.
